(19) Europäisches Patentamt

European Patent Office

Office européen des brevets

(11) Veröffentlichungsnummer: **0 325 924 B1**

(12) **EUROPÄISCHE PATENTSCHRIFT**

(45) Veröffentlichungstag der Patentschrift:
06.11.91 Patentblatt 91/45

(21) Anmeldenummer: 89100203.2

(22) Anmeldetag: 07.01.89

(51) Int. Cl.⁵: **G01B 21/20**

(54) **Rundheitsnormal.**

(30) Priorität: 20.01.88 DE 3801413

(43) Veröffentlichungstag der Anmeldung:
02.08.89 Patentblatt 89/31

(45) Bekanntmachung des Hinweises auf die
Patenterteilung:
06.11.91 Patentblatt 91/45

(84) Benannte Vertragsstaaten:
AT CH DE ES FR GB IT LI NL SE

(56) Entgegenhaltungen:
FR-A- 1 225 132
FR-A- 2 441 831
TECHNISCHE RUNDSCHAU Nr. 9 01.03.1983
Seiten 8 und 9 "RUNDLAUFMESSGERäT"

(73) Patentinhaber: Dr. Johannes Heidenhain
GmbH
Dr.-Johannes-Heidenhain-Strasse 5 Postfach
1260
W-8225 Traunreut (DE)

(72) Erfinder: Ernst, Alfons, Dipl.-Ing.
Traunring 62
W-8225 Traunreut (DE)

## Beschreibung

Die Erfindung betrifft eine Rundlaufmeßeinrichtung zur Ermittlung der Rundlauffehler der Lagerung eines Rotors gemäß dem Oberbegriff des Anspruchs 1.

Zur Messung der Rundheitsabweichungen von Werkstücken werden Rundheitsmeßeinrichtungen mit einem Rotor eingesetzt, dessen Lagerung eine hohe Laufgenauigkeit aufweisen muß. Die Messung der Laufgenauigkeit eines solchen Rotors im Bereich unterhalb eines Mikrometers ist problematisch.

In dem Aufsatz "Abnahmemessungen an einem Zylinderform-Prüfgerät" von W. Dutschke und A. Zimmermann in der Zeitschrift für Industrie und Fertigung 69 (1979) 403-407 ist eine Zylinderformmeßeinrichtung mit einem Rotor in Form eines Drehtisches mit einer Spindel beschrieben, dessen Lauffehler mittels eines Rundheitsnormals in Form eines sphärischen Glasnormals ermittelt werden, das auf dem Drehtisch zentriert angeordnet ist ; das Rundheitsnormal wird von der Tastspitze eines Meßtasters bei der Drehung des Drehtisches über eine Umdrehung abgetastet. Eine solche Ermittlung der Lauffehler der Lagerung des Drehtisches weist aber den Nachteil auf, daß der mechanische Kontakt zwischen dem Rundheitsnormal und dem Meßtaster eine Radialkraft auf das Rundheitsnormal ausüben und einen Verschleiß zur Folge haben kann, der zu Meßungenauigkeiten führen kann ; zudem weisen derartige Glasnormale kurzwellige Rundheitsabweichungen auf.

In der Technischen Rundschau Nr. 9, 1. März 1983, Seite 9 ist ein Rundlaufmeßgerät beschrieben, bei dem eine Rotorwelle mit einer Meßscheibe an einer Spindel einer Werkzeugmaschine zur Messung der Rundlauffehler der Spindellagerung befestigt ist. Diese Meßscheibe weist eine höchstpräzise Kreisform auf, die an zwei um 90° versetzten Stellen durch elektrooptische Sensoren abgetastet wird. Bei der Messung wird die Meßscheibe zur Solldrehachse leicht exzentrisch eingestellt, so daß die beiden Sensoren sinusförmige Abweichungen feststellen, die auf dem Schirm eines Anzeigegeräts überlagert einen Kreis aufzeichnen. Bei genauem Rundlauf der Spindel erscheint somit auf dem Anzeigegerät ein Kreis, der verzerrt wird, sobald die Drehung der Spindel nicht mehr um die Sollachse erfolgt.

Der Erfindung liegt die Aufgabe zugrunde, eine Rundlaufmeßeinrichtung anzugeben, die die Ermittlung der Rundlauffehler der Lagerung eines Rotors mit erhöhter Genauigkeit ermöglicht.

Diese Aufgabe wird erfindungsgemäß durch die kennzeichnenden Merkmale des Anspruchs 1 gelöst.

Die mit der Erfindung erzielten Vorteile bestehen insbesondere darin, daß durch das Vorsehen einer Teilscheibe mit einer Winkelteilung als Rundheitsnormal die Lauffehler der Lagerung eines Rotors mit erhöhter Genauigkeit ermittelt werden können. Diese Ermittlung der Lauffehler erfolgt berührungslos ohne Verschleiß. Während das bekannte Glasnormal zur Ermittlung der Lauffehler der Lagerung des Rotors anstelle des zu messenden Werkstücks zentriert und die bekannte Meßscheibe exzentrisch auf den Drehtisch aufgesetzt werden müssen, ist das vorgeschlagene Rundheitsnormal in Form der Teilscheibe ständig an der Spindel des Drehtisches angeordnet, so daß der Drehtisch ausschließlich dem zu messenden Werkstück vorbehalten bleibt. Während der Messung der Rundheitsabweichungen von Werkstücken kann daher die Laufgenauigkeit der Lagerung des Drehtisches ständig überprüft und ggf. sogar korrigiert werden, wenn sich die Laufgenauigkeit im Laufe der Zeit oder durch Einwirkung äußerer Kräfte oder Momente verändert.

Vorteilhafte Ausbildungen der Erfindung entnimmt man den Unteransprüchen.

Ausführungsbeispiele der Erfindung werden anhand der Zeichnung näher erläutert.

Es zeigen

Figur 1     schematisch eine Rundheitsmeßeinrichtung mit einer Auswerteeinrichtung und

Figur 2     schematisch eine Teilscheibe mit einer Abtasteinheit für eine Doppelabtastung.

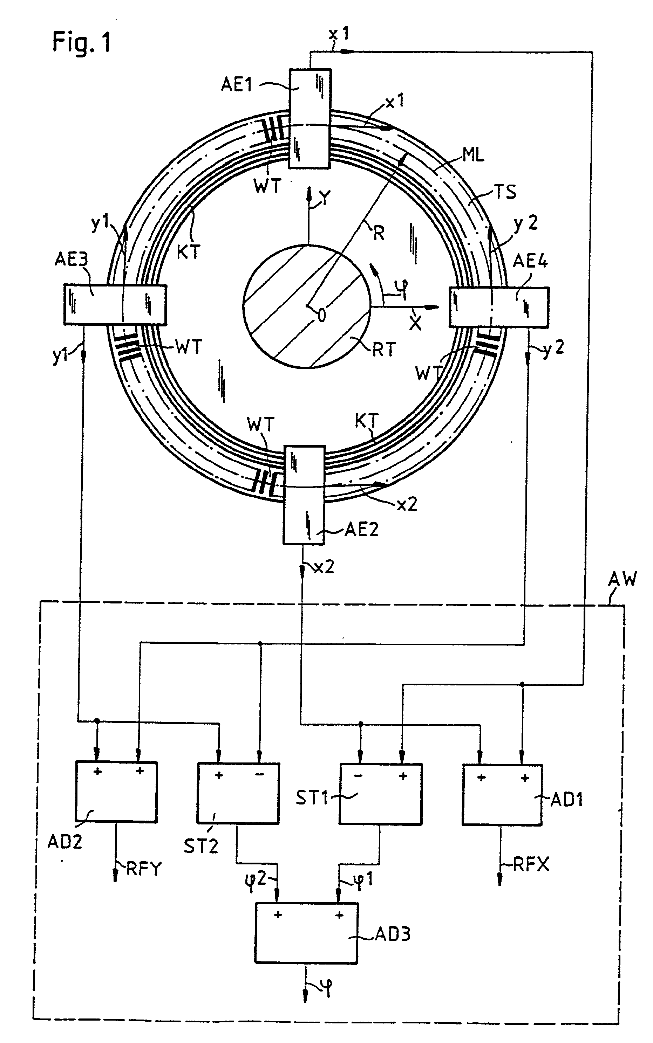

In Figur 1 ist schematisch eine Rundheitsmeßeinrichtung mit einem Rotor RT in Form einer Spindel und eines nicht gezeigten Drehtisches dargestellt ; auf dem Drehtisch wird in nicht gezeigter Weise ein Werkstück zentriert angeordnet und mittels eines Meßtasters zur Ermittlung von Rundheitsabweichungen abgetastet. Eine derartige Rundheitsmeßeinrichtung ist beispielsweise in der DE-PS 3123489 beschrieben.

Zur Ermittlung der Lauffehler in Form der Rundlauffehler der Lagerung des Rotors RT ist ein Rundheitsnormal in Form einer Teilscheibe TS vorgesehen, die konzentrisch mit dem Rotor RT verbunden ist. Die Teilscheibe TS weist eine radiale Winkelteilung WT auf, die von zwei sich diametral gegenüberliegenden lichtelektrischen Abtasteinheiten AE1, AE2 in bekannter Weise abgetastet wird ; die Mittellinie ML der Winkelteilung WT besitzt den Radius R bezüglich der Drehachse O des Rotors RT.

Bei einer Drehung des Rotors RT mitsamt der Teilscheibe TS um den Drehwinkel $\varphi$ liefern die erste Abtasteinheit AE1 einen ersten Meßwert x1 und die zweite Abtasteinheit AE2 einen zweiten Meßwert x2, die beide in einer Auswerteeinrichtung AW jeweils einem ersten Addierbaustein AD1 und einem ersten Subtrahierbaustein ST1 zugeführt werden. Bei einer fehlerfreien Winkelteilung WT und einer exakt zentrischen Lage der Winkelteilung WT bezüglich der Drehachse O des Rotors TR liefern aus den beiden Meßwerten x1, x2 der erste Subtrahierbaustein ST1 den ersten Drehwinkelmeßwert φ1 = (x1 − x2)/2R und der erste Addierbaustein AD1 den Rundlauffehler RFX = (x1 + x2)/2 der Lagerung des Rotors RT in Richtung X.

Gleichzeitig kann die Winkelteilung WT des Rotors RT noch von einer dritten Abtasteinheit AE3 und von einer vierten Abtasteinheit AE4 abgetastet werden, die sich ebenfalls diametral gegenüberliegen und zu der ersten Abtasteinheit AE1 und zu der zweiten Abtasteinheit AE2 um 90° versetzt angeordnet sind. Bei der Drehung des Rotors RT mitsamt der Teilscheibe TS um den Drehwinkel φ liefern die dritte Abtasteinheit AE3 einen dritten Meßwert y1 und die vierte Abtasteinheit AE4 einen vierten Meßwert y2, die beide in der Auswerteeinrichtung AW jeweils einem zweiten Addierbaustein AD2 und einem zweiten Subtrahierbau stein ST2 zugeführt werden. Bei der fehlerfreien Winkelteilung WT und der exakt zentrischen Lage der Winkelteilung WT bezüglich der Drehachse O des Rotors RT liefern aus den beiden Meßwerten y1, y2 der zweite Subtrahierbaustein ST2 den zweiten Drehwinkelmeßwert φ2 = (y1 − y2)/2R und der zweite Addierbaustein AD2 den Rundlauffehler RFY = (y1 + y2)/2 der Lagerung des Rotors RT in Richtung Y ; die beiden Drehwinkelmeßwerte φ1, φ2 sind gleich groß : φ1 = φ2.

Bei partiellen Ungenauigkeiten der Winkelteilung WT, die praktisch nicht ganz vermeidbar sind, können die beiden Drehwinkelmeßwerte φ1, φ2 einem dritten Addierbaustein AD3 zugeleitet werden, der einen gemittelten Drehwinkelmeßwert φ = (φ1 + φ2)/2 = (x1 − x2 + y1 − y2)/4R liefert, so daß die Meßgenauigkeit verbessert wird.

Vorhandene Fehler der Winkelteilung WT der Teilscheibe TS können nach der Herstellung auch auf einer Meßmaschine kalibriert werden ; bei der Verwendung als Rundheitsnormal können diese Fehler der Winkelteilung WT in der Auswerteeinrichtung AW korrigiert werden.

In nicht gezeigter alternativer Weise kann die Teilscheibe auch zwei konzentrische Winkelteilungen aufweisen, die jeweils von wenigstens zwei Abtasteinheiten abgetastet werden. Da der Radius der Winkelteilung bei der Ermittlung der Rundlauffehler nicht von Bedeutung ist, werden vorzugsweise die innere Winkelteilung zur Ermittlung der Rundlauffehler und die äußere Winkelteilung zur Ermittlung der Drehwinkelmeßwerte in der oben beschriebenen Weise abgetastet.

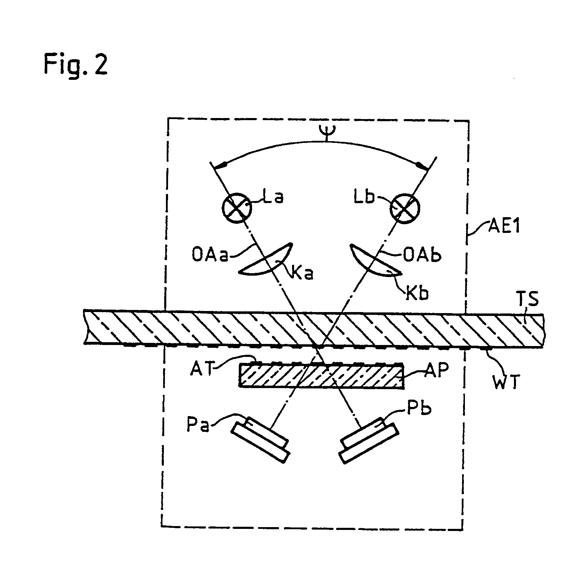

Nach Figur 2 können Lauffehler in Form von Taumelfehlern, die durch Taumeln des Rotors RT bewirkt werden, durch eine Doppelabtastung der Winkelteilung WT mittels jeder Abtasteinheit AE1-AE4 ermittelt werden, von denen nur die Abtasteinheit AE1 in Figur 2 gezeigt ist. Diese lichtelektrische Abtasteinheit AE1 besitzt zwei optische Achsen OAa, OAb, denen jeweils eine Lichtquelle La, Lb, ein Kondensor Ka, Kb, ein Photoelement Pa, Pb sowie eine Abtastplatte AP mit einer gemeinsamen Abtastteilung AT zugeordnet sind. Die optischen Achsen OAa, OAb als Abtastrichtungen schließen einen Winkel ψ > 0 miteinander ein.

In nicht gezeigter alternativer Weise kann der Rotor auch zwei Teilscheiben mit einem gegenseitigen axialen Abstand aufweisen, deren Winkelteilungen in der oben beschriebenen Art zur Ermittlung der Taumelfehler abgetastet werden.

Auf der Teilscheibe TS kann gemäß Figur 1 auch eine konzentrische Teilung KT vorgesehen sein, die von wenigstens zwei Abtasteinheiten AE1-AE4 zur Ermittlung der Lauffehler der Lagerung des Rotors RT abgetastet wird ; diese konzentrische Teilung KT kann auf der Teilscheibe TS alleine oder zusammen mit der Winkelteilung WT vorhanden sein. Das gleichzeitige Vorsehen der Winkelteilung WT und der konzentrischen Teilung KT ermöglicht es beispielsweise, daß zwischen wenigstens zwei der Abtasteinheiten AE1-AE4 ein Winkel < 90° besteht, wenn nur ein Sektor der Teilscheibe TS zur Abtastung zugänglich ist. Die konzentrische Teilung KT kann auch von zusätzlichen Abtasteinheiten abgetastet werden.

Während der Messung der Rundheitsabweichungen von Werkstücken kann die Laufgenauigkeit der Lagerung des Rotors RT ständig überprüft werden ; auftretende Lauffehler können gemessen und einem nicht gezeigten Rechner der Auswerteeinrichtung AW zugeführt werden. Der Rechner überwacht die Laufgenauigkeit während der Messung und bewirkt, daß die Lauffehler in vorgegebenen Grenzen bleiben, oder führt eine Kompensation der Lauffehler durch.

Die Erfindung kann mit Erfolg auch bei Rundtischen einer Bearbeitungsmaschine bei der Bearbeitung von Werkstücken eingesetzt werden.

Die Teilscheibe TS und die Abtasteinheiten AE1-AE4 können nach dem lichtelektrischen, magnetischen, induktiven oder kapazitiven Meßprinzip ausgebildet sein.

## Patentansprüche

1. Rundlaufmeßeinrichtung zur Ermittlung der Rundlauffehler der Lagerung eines Rotors (RT), bei der ein Rundheitsnormal (TS) konzentrisch am Rotor (RT) befestigt ist und von Abtasteinheiten (AE1-AE4) abgetastet wird, dadurch gekennzeichnet, daß das Rundheitsnormal (TS) aus wenigstens einer Teilscheibe mit wenigstens einer Teilung (WT, KT) besteht und daß die Meßwerte (x1, x2, y1, y2) der Abtasteinheiten (AE1-AE4)

EP 0 325 924 B1

wenigstens einem Addierbaustein (AD1, AD2) zur Lieferung des Rundlauffehlers (RFX, RFY) zuführbar sind.

2. Meßeinrichtung nach Anspruch 1, dadurch gekennzeichnet, daß die Teilscheibe (TS) eine Winkelteilung (WT) aufweist, die von wenigstens zwei Abtasteinheiten (AE1-AE4) abgetastet wird.

3. Meßeinrichtung nach Anspruch 1, dadurch gekennzeichnet, daß die Teilscheibe zwei Winkelteilungen aufweist, die jeweils von wenigstens zwei Abtasteinheiten abgetastet werden.

4. Meßeinrichtung nach Anspruch 2 oder 3, dadurch gekennzeichnet, daß die wenigstens zwei Meßwerte (x1, x2, y1, y2) der wenigstens zwei Atasteinheiten (AE1-AE4) wenigstens einem Subtrahierbaustein (ST1, ST2) zur Lieferung des Drehwinkelmeßwertes (φ1, φ2) zuführbar sind.

5. Meßeinrichtung nach Anspruch 2 oder 3, dadurch gekennzeichnet, daß die Abtasteinheiten (AE1-AE4) für eine Doppelabtastung der Winkelteilung (WT) ausgebildet sind und daß die Abtastrichtungen (OAa, OAb) dieser Dopppelabtastung in jeder Abtasteinheit (AE1-AE4) einen Winkel ψ > 0 miteinander einschließen.

6. Meßeinrichtung nach Anspruch 1, dadurch gekennzeichnet, daß zwei Teilscheiben mit jeweils einer Winkelteilung konzentrisch mit einem axialen Abstand am Rotor angeordnet sind.

7. Meßeinrichtung nach Anspruch 1, dadurch gekennzeichnet, daß die Teilscheibe (TS) eine konzentrische Teilung (KT) aufweist.


## Claims

1. Concentric running measuring device for determining the running errors of the bearing of a rotor (RT), in which a roundness standard (TS) is fixed concentrically to the rotor (RT) and is sensed by sensing devices (AE1-AE4), characterized in that the roundness standard (TS) consists of at least one graduated disc with at least one graduation (WT, KT) and in that the measured values (x1, x2, y1, y2) of the sensing units (AE1-AE4) can be fed to at least one adding element (AD1, AD2) for providing the running error (RFX, RFY).

2. Measuring device according to claim 1, characterized in that the graduated disc (TS) has an angular grating (WT), which is sensed by at least two sensing units (AE1-AE4).

3. Measuring device according to claim 1, characterized in that the graduated disc has two angular graduations, each of which is sensed by at least two sensing units.

4. Measuring device according to claim 2 or 3, characterized in that the at least two measured values (x1, x2, y1, y2) of the at least two sensing units (AE1-AE4) can be fed to at least one subtracting element (ST1, ST2) for providing the rotational angle measured value (Φ1, Φ2).

5. Measuring device according to claim 2 or 3, characterized in that the sensing units (AE1-AE4) are arranged for double sensing of the angular graduation (WT) and in that the sensing directions (OAa, OAb) of this double sensing in each sensing unit (AE1-AE4) subtend an angle ψ > 0.

6. Measuring device according to claim 1, characterized in that two graduated discs, each with an angular graduation are arranged axially spaced, concentrically on the rotor.

7. Measuring device according to claim 1, characterized in that the graduated disc (TS) has a concentric graduation (KT).


## Revendications

1. Dispositif de mesure de la concentricité permettant de déterminer le faux-rond des paliers d'un rotor (RT), dans lequel un étalon de circularité (TS) est monté concentrique sur le rotor (RT) et est lu par des unités de lecture (AE1-AE4), **caractérisé en ce que** l'étalon de circularité (TS) se compose d'au moins un plateau diviseur muni d'au moins une graduation (WT, KT) et en ce que les valeurs de mesure (x1, x2, y1, y2) des unités de lecture (AE1-AE4) sont amenées à au moins un organe additionneur (AD1, AD2) pour la délivrance du défaut de circularité (RFX, RFY).

2. Dispositif de mesure selon la revendication 1 **caractérisé en ce que** le plateau diviseur (TS) comporte au moins une graduation angulaire (WT) qui est lue par au moins deux unités de lecture (AE1-AE4).

3. Dispositif de mesure selon la revendication 1 **caractérisé en ce que** le plateau diviseur comporte au moins deux graduations angulaires qui sont lues chacune par au moins deux unités de lecture.

4. Dispositif de mesure selon la revendication 2 ou 3 **caractérisé en ce que** les au moins deux valeurs de mesure (x1, x2, y1, y2) des au moins deux unités de lecture (AE1-AE4) sont amenées à au moins un organe soustracteur (ST1, ST2) pour la délivrance de la valeur de mesure de l'angle de rotation (φ1, φ2).

5. Dispositif de mesure selon la revendication 2 ou 3 **caractérisé en ce que** les unités de lecture (AE1-AE4) sont réalisées pour une lecture double de la graduation angulaire (WT) **et en ce que** les directions de lecture (OAa, OAb) de ladite lecture double forment entre eux un angle ψ > 0 dans chaque unité de lecture (AE1-AE4).

4

6. Dispositif de mesure selon la revendication 1 **caractérisé en ce que deux** plateaux diviseurs munis chacun d'une graduation angulaire sont montés concentriques, à une certaine distance l'un de l'autre, sur le rotor.

7. Dispositif de mesure selon la revendication 1 **caractérisé en ce que** le plateau diviseur (TS) comporte une graduation (KT) concentrique.

Fig. 1

Fig. 2